Europäisches Patentamt

(19) European Patent Office (11) Numéro de publication : **0 037 299**

Office européen des brevets **B1**

(12) FASCICULE DE BREVET EUROPÉEN

(45) Date de publication du fascicule du brevet : (51) Int. Cl.³ : **H 04 L   7/02**
**13.06.84**

(21) Numéro de dépôt : **81400369.5**

(22) Date de dépôt : **10.03.81**

(54) **Dispositif de synchronisation d'informations numériques transmises par paquets.**

(30) Priorité : **28.03.80 FR 8007015**

(43) Date de publication de la demande :
**07.10.81 Bulletin 81/40**

(45) Mention de la délivrance du brevet :
**13.06.84 Bulletin 84/24**

(84) Etats contractants désignés :
**DE GB**

(56) Documents cités :
**FR-A- 1 544 612**
**FR-A- 2 167 259**
**FR-A- 2 172 900**
**US-A- 3 613 019**
**IEEE INTERNATIONAL CONFERENCE ON COMMU-**
**NICATIONS; Boulder, Colorado, 9-11 juin 1969, édité**
**par R.K. SALAMAN New York, U.S.A. K. NOSAKA et**
**al.: "PSK-demodulator with delay line for PCM-TDMA**
**system" pages 37-19 à 37-24**
**TELECOMMUNICATIONS AND RADI ENGINEERING,**
**vol. 31/32, no. 8, 1977 New York, U.S.A. A.S. GEOR-**
**GIYEV: "A synchronization system with digital control**
**in high-speed data transmission" pages 22-24**

(73) Titulaire : **THOMSON-CSF**
**173, Boulevard Haussmann**
**F-75379 Paris Cedex 08 (FR)**

(72) Inventeur : **Fourcade, Pierre**
**THOMSON-CSF SCPI 173, bld Haussmann**
**F-75360 Paris Cedex 08 (FR)**
Inventeur : **Dupray, Dominique**
**THOMSON-CSF SCPI 173, bld Haussmann**
**F-75360 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

## Description

L'invention se rapporte à la transmission d'informations numériques et plus particulièrement à un dispositif de synchronisation d'informations numériques transmises par paquets.

Dans certains systèmes de transmission d'informations numériques, pour éviter une interception des données par un tiers non destinataire, au lieu d'utiliser une fréquence porteuse donnée pendant toute la durée de la transmission, les informations après (compression) sont groupées par paquets, ces paquets étant séparés par des intervalles de temps déterminés et chaque paquet étant transmis en modulant une fréquence porteuse particulière. Il y a donc un saut de fréquence entre deux paquets successifs. La durée qui sépare les paquets est la durée nécessaire pour que les organes de l'émetteur et du récepteur (filtres, synthétiseurs...) soient accordés sur la fréquence correspondant au paquet suivant. Ce type de transmission est dit transmission en évasion de fréquences.

Lors de la réception des messages, il est nécessaire de synchroniser le récepteur à partir des données reçues ; en effet, le rythme des éléments binaires constituant le message est connu par le récepteur, mais la phase de ces éléments binaires ne l'est pas et il faut reconstituer, à partir de l'information reçue, une horloge en phase avec les éléments d'information.

Cette synchronisation est effectuée dans les dispositifs classiques soit seulement au début du message (et éventuellement renouvelée au cours de la transmission), soit en permanence, une horloge à la fréquence des éléments binaires étant asservie aux données reçues par des moyens convenables permettant de s'affranchir du bruit qui affecte les éléments binaires reçus.

Dans les systèmes de transmission du type à évasion de fréquences, où les informations sont transmises par paquets sur des porteuses à fréquences différentes, comme indiqué ci-dessus, le problème de la synchronisation se complique du fait que les écarts de phase sur les données reçues peuvent varier en fonction de la fréquence porteuse utilisée pour la transmission, même si les conditions de propagation sont par ailleurs inchangées et si les postes d'émission et de réception sont fixes. Les écarts de phase varient, a fortiori, si les conditions de propagation varient ou si l'un au moins des postes, émetteur ou récepteur, est mobile.

Par conséquent dans ce type de systèmes, il est nécessaire de synchroniser une horloge du récepteur sur les données reçues, cette horloge étant recalée pour chaque paquet d'éléments binaires reçus, l'écart de phase étant quasi constant pendant toute la durée de transmission d'un paquet.

Pour réaliser la synchronisation de l'horloge du récepteur sur les éléments binaires reçus, ces éléments binaires étant tous des éléments constituant le message transmis, on connaît un dispositif de synchronisation qui comporte principalement une ligne à retard et un circuit de synchronisation en parallèle recevant tous deux les éléments binaires après démodulation de la porteuse. Le retard introduit par la ligne à retard est tel que l'horloge du récepteur soit calée en phase avec les éléments binaires lorsque ceux-ci sortent de la ligne. Le circuit de synchronisation utilise donc les éléments binaires reçus pour effectuer la synchronisation et tient compte pour déterminer l'écart de phase d'un certain nombre d'éléments binaires successifs. Ce lissage introduit par le circuit de synchronisation permet d'éviter de fixer l'écart de phase à une valeur qui tiendrait compte du bruit affectant les éléments binaires reçus.

Un tel dispositif n'est pas adapté à la synchronisation de messages binaires transmis par paquets, chaque paquet étant affecté d'un écart de phase différent de celui qui affecte le paquet précédent du fait du saut de fréquence porteuse, car les éléments binaires de la fin d'un paquet seraient échantillonnés par un signal d'horloge calé en phase par un circuit tenant compte des éléments binaires du paquet suivant dont les écarts de phase sont différents.

Il est connu par un brevet US 3 613 019 un dispositif de synchronisation qui résout ce problème en utilisant deux circuits de récupération d'horloge commutés de façon que le signal de synchronisation établi par l'un pour un paquet de données soit maintenu jusqu'à la fin de ce paquet, l'autre établissant le signal de synchronisation du paquet suivant. Ce système nécessite un doublement des circuits de synchronisation.

L'invention a pour objet un dispositif de synchronisation qui résout ce problème, sans mettre en œuvre beaucoup plus d'éléments que les dispositifs de synchronisation actuels, en utilisant un seul circuit de récupération d'horloge.

Ce dispositif permet d'élaborer un signal synchronisé qui est mis en mémoire après une durée au moins égale à la durée nécessaire pour que la synchronisation soit établie avec une bonne probabilité, ce signal étant utilisé pour échantillonner le signal sortant de la ligne à retard pendant le temps où les informations numériques reçues et celles sortant de la ligne à retard n'appartiennent pas au même paquet.

Suivant l'invention, un dispositif de synchronisation d'informations numériques transmises par paquets comportant en série un circuit d'entrée relié à l'entrée de signal numérique, une ligne à retard, de retard $T_S$ égal à la durée d'acquisition d'un signal synchronisé sur les données reçues, et un circuit d'échantillonnage de sortie, et comportant en outre un circuit de synchronisation ayant une entrée reliée à l'entrée de signal numérique et une sortie reliée à l'entrée d'horloge du circuit d'échantillonnage, ce circuit comportant un générateur de signaux de référence de même rythme que les informations numériques et déphasés les uns par rapport aux autres, le circuit de synchronisation comportant un circuit d'acquisition de signal synchronisé sur les informations reçues est caractérisé en ce que le circuit de synchronisation comporte en outre un circuit de transmission de signal synchronisé ayant la sortie relié à l'entrée d'horloge du circuit d'échantillonnage de sortie, et ayant une entrée reliée au générateur, la sortie du circuit d'acquisition étant reliée à une première entrée de commande du circuit de transmission de signal synchronisé qui a par ailleurs une deuxième entrée de commande recevant un signal de commande $H_S$ issu du signal d'enveloppe des paquets reçus, la sortie de la voie de transmission délivrant le signal synchronisé sur les données reçues, acquis à la fin d'un paquet d'informations reçu, pendant la durée $T_S$ séparant la fin du paquet reçu de la fin de la transmission de ce même paquet par la ligne à retard, l'acquisition d'un nouveau signal synchronisé sur les informations reçues du paquet suivant étant effectuée simultanément.

L'invention sera mieux comprise et d'autres caractéristiques apparaîtront à l'aide de la description qui suit en référence aux figures annexées.

La figure 1 représente un mode de réalisation du dispositif de synchronisation selon l'invention ;

la figure 2 est un diagramme temporel des signaux en différents points de ce dispositif ;

la figure 3 est un diagramme montrant le séquencement des différentes opérations de synchronisation, pour un dispositif dans lequel la durée d'un paquet d'éléments binaires est égale au retard introduit par la ligne à retard ;

la figure 4 est un diagramme montrant le séquencement des opérations, pour un dispositif dans lequel la durée d'un paquet est supérieure au retard introduit par la ligne à retard.

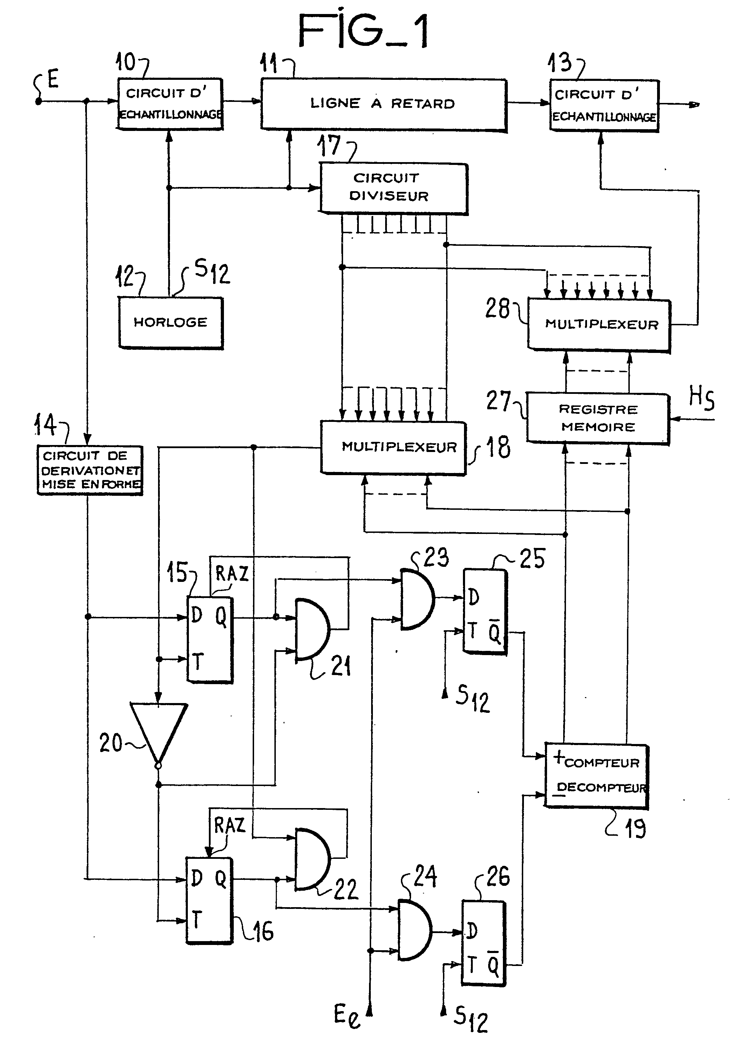

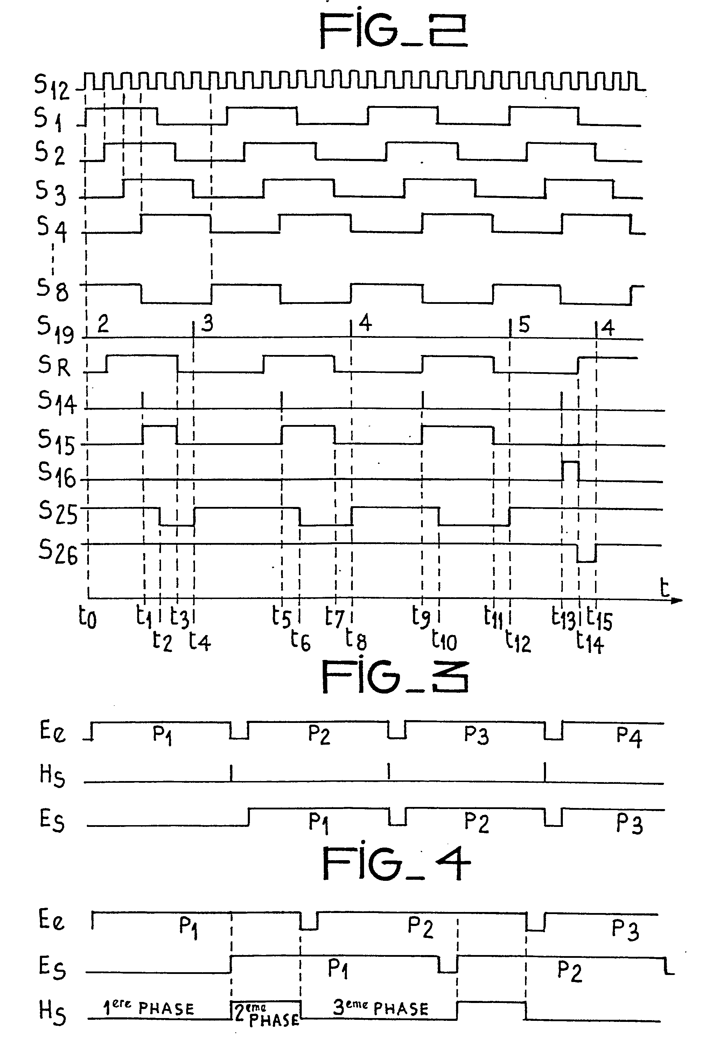

Le dispositif de synchronisation selon l'invention est représenté sur la figure 1 et la figure 2 représente les signaux en différents points de ce dispositif.

Il comporte une entrée E recevant la suite des éléments binaires restitués après réception du signal transmis et démodulation de la porteuse modulée par l'information. Ces éléments binaires ont un rythme f, en bits/s, par exemple $f = 16 \times 10^3$ bits/s pour une transmission numérique codant la parole. A titre d'exemple, la durée de transmission des paquets peut être 1 ms, ce qui correspond à 16 éléments binaires.

Cette entrée E est reliée à l'entrée de signal d'un circuit d'échantillonnage 10 dont la sortie est reliée à l'entrée d'une ligne à retard 11, par exemple un registre à décalage ayant une entrée d'horloge de décalage.

La précision de synchronisation recherchée étant ± 1/k bits, où k est un entier, cette précision est obtenue en comparant les transitions éventuelles des éléments binaires d'entrée avec des signaux décalés les uns par rapport aux autres de 1/kf, obtenus à partir d'une horloge de rythme $F = kf$. La durée de la phase de synchronisation est $T_S$ (durée d'un message ayant une probabilité p de contenir k transitions) et la longueur de la ligne à retard est choisie pour mettre en mémoire les données échantillonées au rythme F correspondant à la durée $T_S$.

Bien entendu la durée de la phase de synchronisation est au plus égale à la durée de transmission d'un paquet d'informations. Les diagrammes de séquencement des figures 3 et 4 décrits ci-après montrent respectivement un cas où $T_S$ est égale à la durée d'un paquet et un cas où $T_S$ est inférieure à la durée d'un paquet.

Une horloge 12, de rythme F, a sa sortie reliée d'une part à l'entrée de commande du circuit d'échantillonnage 10, d'autre part à l'entrée d'horloge de décalage de la ligne à retard 11. La sortie de la ligne à retard est reliée à l'entrée de signal d'un second circuit d'échantillonnage 13 ayant une entrée de commande d'échantillonnage et dont la sortie délivre les données échantillonnées synchronisées. Les éléments susdécrits constituent la première voie, dite voie signal, du dispositif de synchronisation.

Les éléments décrits ci-dessous forment la voie de synchronisation du dispositif.

L'entrée E est reliée à l'entrée d'un circuit de dérivation et de mise en forme, 14, fournissant des impulsions courtes pour les transitions du signal numérique reçu appliqué à l'entrée E.

La sortie du circuit 14 est reliée aux entrées D, de deux bascules 15 et 16 de type « D », ces bascules ayant par ailleurs des entrées d'horloge, T, et des entrées de remise à zéro, RAZ. Ces bascules 15 et 16 permettent de déterminer le sens et la durée de l'écart entre les impulsions fournies par le circuit 14 correspondant aux transitions du signal binaire d'entrée, et un signal de référence $S_R$ auquel ces impulsions sont « comparées » comme il est indiqué ci-dessous.

Le signal de référence est obtenu de la manière suivante :

La sortie de l'horloge 12 est reliée à l'entrée d'un circuit diviseur par k, 17, qui fournit sur k sorties, k signaux de rythme f décalés dans le temps l'un par rapport au suivant d'une période du signal d'horloge rapide de rythme F. Le diagramme de la figure 2 a été établi en choisissant $k = 8$. La dernière ligne du diagramme temporel de la figure 2 indique l'échelle des temps. La première ligne de cette même figure 2 montre le signal d'horloge rapide $S_{12}$ de rythme F. Les signaux suivants, $S_i$, $i = 1,8$, sont les signaux de rythme f décalés d'une période de l'horloge rapide ; seuls les signaux $S_1$, $S_2$, $S_3$, $S_4$ et $S_8$ ont été représentés.

Les sorties du circuit diviseur 17 sont reliées aux entrées d'un multiplexeur 18 dont la sortie délivre le signal de référence $S_R$, qui est à un instant donné, l'un des k signaux présents sur les entrées, choisi en fonction de l'état des entrées de commande du multiplexeur 18.

Ces entrées de commande du multiplexeur 18 sont reliées aux sorties d'un circuit compteur-décompteur 19 ayant une entrée de comptage « + », et une entrée de décomptage « − ». Ce circuit est susceptible de compter jusqu'à k et le contenu de ce compteur correspond à un instant donné à l'indice i du signal sélectionné par le multiplexeur. La sortie du multiplexeur 18 est reliée directement à l'entrée d'horloge T de la bascule 15 et par l'intermédiaire d'un inverseur 20 à l'entrée d'horloge T de la bascule 16. La sortie de la bascule 15 est reliée à une première entrée d'une porte ET 21 dont la seconde entrée est reliée à la sortie de l'inverseur 20.

De la même manière, la sortie de la bascule 16 est reliée à une première entrée d'une porte ET 22 dont la seconde entrée est reliée à la sortie du multiplexeur 18. Les sorties des portes ET, 21 et 22, sont respectivement reliées aux entrées RAZ des bascules 15 et 16. Les sorties Q de ces bascules sont également reliées aux premières entrées de deux portes ET, respectivement 23 et 24 recevant sur leurs secondes entrées un signal $E_e$, enveloppe des paquets d'informations à l'entrée du dispositif, de niveau 1 pendant les phases de transmission des paquets de données et de niveau 0 entre les paquets.

Les sorties de ces portes ET 23 et 24 sont respectivement reliées aux entrées de signal de deux bascules de type « D », 25 et 26, recevant sur leurs entrées d'horloge, T, le signal de sortie de l'horloge à fréquence $\underline{F}$, $S_{12}$. Les sorties inversées de ces bascules, $\overline{Q}$, sont respectivement reliées aux entrées de comptage « + » et de décomptage « − » du circuit 19. Les fronts montants des signaux appliqués aux entrées du compteur 19 commandent les changements de contenu de ce compteur.

Sur la figure 2, la ligne $S_{19}$ indique le contenu du compteur et les instants de changement de ce contenu. Le signal de référence $S_R$ reproduit l'un ou l'autre des signaux $S_i$ suivant le contenu du compteur. Les signaux $S_{14}$, $S_{15}$ et $S_{16}$ représentent respectivement les signaux de sortie du circuit 14 et des bascules 15 et 16. Les signaux $S_{25}$ et $S_{26}$ sont les signaux appliqués aux entrées « + » et « − » du circuit compteur-décompteur.

Le dispositif fonctionne de la manière suivante :

Le signal de référence présent à la sortie du multiplexeur 18, soit $S_2$ à l'instant $t_o$ sur l'exemple de la figure 2, est appliqué à l'entrée d'horloge de la bascule 15, $S_2$ inversé étant appliqué à l'entrée d'horloge de la bascule 16. A l'instant $t_1$ correspondant à la première transition des données reçues, la sortie de la bascule 15 passe de l'état 0 à l'état 1, son entrée T étant alors à l'état 1. Le signal $E_e$ étant à l'état 1, la sortie de la porte ET 23 passe à 1 et sur le front montant qui suit du signal d'horloge $S_{12}$, à l'instant $t_2$, la sortie inversée de la bascule 25 initialement à 1 passe à 0. Sur le front descendant du signal $S_2$, à l'instant $t_3$, la sortie de l'inverseur passe à 1 et la sortie de la porte 21 passe à 1 ; ce qui provoque la remise à zéro de la bascule 15. Le front montant suivant du signal d'horloge $S_{12}$, à l'instant $t_4$, provoque le basculement de la bascule 25 dont la sortie inversée repasse à 1.

Le front montant du signal $S_{25}$ appliqué à l'entrée « + » du compteur 19 commande une augmentation d'une unité du contenu de ce compteur qui provoque un changement de signal de référence à la sortie du multiplexeur 18, le signal présent sur la sortie de 18 étant alors le signal $S_3$. Les mêmes commandes sont reproduites pour les deux impulsions suivantes intervenant aux instants $t_5$ et $t_9$ et les signaux $S_4$, puis $S_5$ sont donc successivement transmis par le multiplexeur 18. Puis, à la quatrième impulsion courte appliquée aux entrées d'horloge des bascules, à l'instant $t_{13}$, la bascule 16 recevant le signal $S_5$ inversé passe à l'état 1. Sur le front montant suivant du signal $S_{12}$, à l'instant $t_{14}$, la sortie inversée de la bascule 26 passe à 0. Cet instant coïncide également avec le changement d'état du signal $S_5$ et donc avec la remise à zéro de la bascule 16. Sur le front montant du signal $S_{12}$, à l'impulsion d'horloge qui suit à l'instant $t_{15}$, l'entrée de la bascule 26 étant remenée à 0, la sortie inversée de cette bascule repasse à 1. Ce front montant du signal $S_{26}$ commande une diminution d'une unité du contenu du compteur. Le signal présent sur la sortie du multiplexeur est donc à nouveau le signal $S_4$. Dans l'exemple représenté sur la figure 2, les impulsions courtes à la sortie du circuit de dérivation ne coïncident pas exactement avec les transitions de l'un des signaux $S_i$. Par conséquent le signal de référence à la sortie du multiplexeur 18 oscille entre $S_4$ et $S_5$.

Dans l'exemple choisi $k = 8$. Ainsi, si chaque paquet comporte 16 éléments binaires, et si la probabilité de transition dans une période de bit est 1/2, la synchronisation sera obtenue avec une bonne probabilité à la fin du paquet.

Pour la commande d'échantillonnage à la sortie de la ligne à retard à partir de la référence de phase ainsi obtenue, le dispositif comporte un registre mémoire 27 dont les entrées sont reliées aux sorties du circuit compteur-décompteur 19.

Ce registre mémoire a une entrée de commande. Les sorties de ce registre 27 sont reliées aux entrées de commande d'un second multiplexeur 28 ayant k entrées de signal reliées, comme les entrées de signal du multiplexeur 18, aux k sorties du circuit diviseur 17. Le multiplexeur 26 fournit sur sa sortie l'un des k signaux $S_i$ présents sur ses entrées choisi à partir de l'indice i à la sortie du registre mémoire.

Dans un cas simple, la durée $T_S$ de la phase de synchronisation correspond à la durée d'un paquet et la longueur de la ligne à retard est égale à la longueur d'un paquet. Dans ce cas, comme le montre le diagramme de séquencement de la figure 3 (pour lequel l'échelle des temps est différente de celle de la figure 2) le signal de commande $H_S$ appliqué à l'entrée de commande du registre mémoire 27 est directement dérivé du signal d'enveloppe des paquets $E_e$.

Sur ce diagramme de séquencement, la première ligne montre l'enveloppe $E_e$ des paquets $P_1$, $P_2$ ... d'éléments binaires à l'entrée de la ligne à retard 11. Ce signal est le signal appliqué à l'entrée des portes 23 et 24 de façon que le circuit compteur-décompteur 19 ne change pas d'état entre la fin d'une phase de synchronisation sur les données d'un paquet et le début de la phase de synchronisation sur les données du paquet suivant. Sur la seconde ligne du diagramme est représenté le signal $H_S$, les impulsions étant les impulsions de mise en mémoire dans le registre à mémoire 27 de l'état du compteur 19. Le dernier signal représente l'enveloppe $E_S$ des paquets d'éléments binaires à la sortie de la ligne à retard.

Le diagramme de séquencement de la figure 4 montre un cas dans lequel le nombre de transitions dans un paquet est supérieur à k. Dans ce cas la durée d'acquisition de la synchronisation est inférieure à la durée d'un paquet et le retard introduit par la ligne à retard peut être inférieur à la période des paquets. Pendant la première phase, les bits d'un paquet entrent dans la ligne à retard. Le circuit de synchronisation effectue les comparaisons. A la fin du délai introduit par la ligne à retard, le signal synchronisé est obtenu. Au lieu de le mettre en mémoire à cet instant et d'échantillonner les bits de ce même paquet qui commencent à sortir de la ligne à retard avec ce signal pendant toute la durée du paquet sortant, le circuit de synchronisation continue d'effectuer les comparaisons jusqu'à la fin du paquet d'informations (commandé par le signal d'horloge paquet). Ainsi la synchronisation peut être affinée. Pendant cette deuxième phase, l'échantillonnage par le circuit 13 est fait par le signal synchronisé qui est le signal de référence éventuellement variable $S_R$. Pour cela le signal de commande $H_S$ appliqué à l'entrée de commande du registre à mémoire est au niveau 1 pendant toute la seconde phase. Ainsi les sorties de ce registre donnent à tout moment les signaux présents sur ses entrées.

A la fin de la réception du paquet, ce signal $H_S$ est ramené à zéro de façon que les sorties du registre 27 restent dans le dernier état, et cela pendant toute la troisième phase, où les informations sortant de la ligne à retard appartiennent au premier paquet $P_1$ et celles reçues et transmises au circuit de synchronisation appartiennent au paquet $P_2$, et pendant l'intervalle entre les deux paquets, où le circuit de synchronisation n'effectue pas de comparaison. Puis le dispositif est ramené dans le même état qu'au début de la deuxième phase, les premières informations du paquet $P_2$ sortant de la ligne à retard, et le signal $H_S$ reprend le niveau 1.

L'invention n'est pas limitée au mode de réalisation précisément décrit. En particulier, dans le cas où la durée de la phase de synchronisation est inférieure à celle d'un paquet, il est également possible de prévoir que le changement de contenu du compteur 19 ne soit modifié qu'après plusieurs impulsions indiquant des écarts de phase dans le même sens, par exemple 2 ou 3 impulsions. En effet, comme indiqué ci-dessus, lorsque les transitions du signal d'entrée ne coïncident pas exactement avec l'un des signaux de référence, il y a oscillation du contenu du compteur. Pendant la deuxième phase où l'échantillonnage par le circuit 13 est commandé directement par le signal de référence, il y a donc oscillation entre deux signaux. La commande de changement d'état du compteur 19 seulement après plusieurs impulsions indiquant les écarts dans le même sens permet d'éviter cette instabilité éventuelle.

De plus, l'exemple de réalisation du dispositif est donné à titre d'exemple non limitatif. Les mêmes fonctions peuvent être obtenues par des circuits de commande différents.

**Revendications**

1. Dispositif de synchronisation d'informations numériques transmises par paquets comportant en série un circuit d'entrée (10), relié à l'entrée de signal numérique, une ligne à retard (11) de retard $T_S$ égal à la durée d'acquisition d'un signal synchronisé sur les données reçues, et un circuit d'échantillonnage de sortie (13), et comportant en outre un circuit de synchronisation (12, 14 à 28) ayant une entrée reliée à l'entrée de signal numérique et une sortie reliée à l'entrée d'horloge du circuit d'échantillonnage, ce circuit comportant un générateur (12, 17) de signaux de référence de même rythme que les informations numériques et déphasés les uns par rapport aux autres, le circuit de synchronisation (12, 14 à 28) comportant un circuit d'acquisition de signal synchronisé sur les informations reçues (14 à 16, 19 à 26) caractérisé en ce que, le circuit de synchronisation (12, 14 à 28) comporte en outre un circuit de transmission (27, 28) de signal synchronisé ayant la sortie reliée à l'entrée d'horloge du circuit d'échantillonnage de sortie (13), et ayant une entrée reliée au générateur (12, 17), la sortie du circuit d'acquisition (14 à 16, 19 à 26) étant reliée à une première entrée de commande du circuit de transmission de signal synchronisé (27, 28) qui a par ailleurs une deuxième entrée de commande recevant un signal de commande $H_S$ issu du signal d'enveloppe des paquets reçus, la sortie du circuit de transmission (27, 28) délivrant le signal synchronisé sur les données reçues, acquis à la fin d'un paquet d'informations reçu, pendant la durée $T_S$ séparant la fin du paquet reçu de la fin de la transmission de ce même paquet par la ligne à retard (11), l'acquisition d'un nouveau signal synchronisé sur les informations reçues du paquet suivant étant effectuée simultanément.

2. Dispositif selon la revendication 1, caractérisé en ce que, la durée $T_S$ étant égale à la durée des paquets, le signal synchronisé sur les données reçues n'est disponible qu'à la fin de la réception d'un paquet d'informations, ce signal étant le signal transmis à l'entrée d'horloge d'échantillonnage pendant la sortie des informations du même paquet de la ligne à retard.

3. Dispositif selon la revendication 1, caractérisé en ce que, $T_S$ étant inférieure à la durée des paquets et le signal synchronisé sur les données reçues étant disponible avant la fin d'un paquet reçu, le circuit de transmission commande la transmission de ce signal synchronisé sur les données reçues, éventuellement variable, à l'entrée d'horloge d'échantillonnage tant que les informations reçues et celles sortant de la ligne à retard (11) appartiennent au même paquet.

4. Dispositif selon l'une quelconque des revendications 1 à 3, caractérisé en ce que le générateur (12 et 17) fournit des signaux de référence rectangulaires $S_i$, $i = 1$ à $k$, de même rythme f que les informations numériques mais décalés l'un par rapport au suivant de $1/k \cdot f$, en ce qu'il comporte un premier multiplexeur (18) ayant k entrées de signal reliées aux sorties du générateur (12, 17) et une sortie délivrant l'un des signaux de référence sélectionné par une entrée de sélection, et en ce que le circuit d'acquisition (14 à 16, 19 à 26) comporte un circuit logique de comparaison (15, 16 et 20 à 26) relié à l'entrée de signal numérique d'une part et à la sortie du multiplexeur d'autre part et un compteur (19) relié à la sortie du circuit logique dont l'état indique le signal sélectionné parmi les $S_i$, la sortie de ce compteur (19) étant reliée à l'entrée de sélection du premier multiplexeur (18), le compteur (19) étant incrémenté ou décrémenté à chaque transition du signal numérique suivant que cette transition est en avance ou en retard par rapport à la transition correspondante du signal de référence sélectionné, et en ce que le circuit de transmission comporte un second multiplexeur (28) ayant des entrées de signal reliées aux sorties du générateur (12, 17) une entrée de commande reliée à la sortie du compteur (19) par un registre à mémoire (27), et une sortie reliée à l'entrée d'horloge d'échantillonnage, le registre mémoire ayant une entrée de commande recevant le signal de commande $H_S$.

**Claims**

1. Digital data synchronization device transmitted by groups comprising in series an input circuit (10), connected to the digital signal input, a delay line (11) of delay $T_S$ equal to the acquisition duration of a synchronized signal on the data received, and an output sampling circuit (13), and comprising furthermore a synchronization circuit (12, 14 to 28) having an input connected to the digital signal input and an output connected to the clock input of a sampling circuit, this circuit comprising a generator (12, 17) of reference signals of the same rythm as the digital data and dephased with respect to one another, the synchronization circuit (12, 14 to 28) comprising a signal acquisition circuit synchronized on the data received (14 to 16, 19 to 26), characterized in that the synchronization circuit (12, 14 to 28) comprises furthermore a synchronized signal transmission circuit (27, 28) having the output connected to the clock input of the output sampling circuit (13), and having an input connected to the generator (12, 17), the output of the acquisition circuit (14 to 16, 19 to 26) being connected to a first control input of the transmission circuit of synchronized signal (27, 28) that has furthermore a second control input receiving a control signal $H_S$ issuing from the envelope signal of the groups received, the output of the transmission circuit (27, 28) supplying the synchronized signal on the data received, acquired at the end of a group of data received, during the duration $T_S$ separating the end of the received group from the end of the transmission of this same group by the delay line (11), the acquisition of a new synchronized signal on the data received from the following group being simultaneously carried out.

2. Device according to claim 1, characterized in that, the duration $T_S$ being equal to the duration of the groups, the signal synchronized on the data received is only available at the end of receiving of a group of data, this signal being the signal transmitted to the clock input of the sampling during the output of the data of the same group of the delay line.

3. Device according to claim 1, characterized in that $T_S$ being shorter than the duration of the groups and the synchronized signal on the data received being available before the end of a group received, the transmission circuit controls the transmission of this synchronized signal on the data received, possibly variable, at the sampling clock input so long the data received and that leaving the delay line (11) belong to the same group.

4. Device according to any one of claims 1 to 3, characterized in that the generator (12 and 17) supplies rectangular reference signals $S_i$, $i = 1$ to k, at the same rythm f as the digital data but shifted with respect to the following by $1/(k \cdot f)$, in that it comprises a first multiplexer (18) having k signal inputs connected to the outputs of the generator (12, 17) and an output supplying one of the reference signals selected by a selection input and in that the acquisition circuit (14-16, 19-26) comprises a comparison logic circuit (15, 16 and 20 to 26) connected to the digital signal input, on the one hand, and to the output of the multiplexer, on the other hand, and a counter (19) connected to the output of the logic circuit the state of which indicates the signal selected among $S_i$, the output of this counter (19) being connected to the selection input of the first multiplexer (18), the counter (19) being incremented or decremented at each transition of the digital signal according to whether this transition is in advance or delayed with respect to the corresponding transition of the selected reference signal, and in that the transmission circuit comprises a second multiplexer (28) having signal inputs connected to the outputs of the generator (12, 17), a control input connected to the output of the counter (19) by a memory register (27), and an output connected to the sampling clock in out, the memory register having a control input receiving the control signal $H_S$.

## Ansprüche

1. Vorrichtung zum Synchronisieren von gruppenweise übertragenen numerischen Informationen, umfassend, in Serienschaltung, einen an den Eingang der numerischen Signals angeschlossenen Eingangsstromkreis (10), eine Verzögerungslinie (11) mit einer Dauer der Ermittlung eines in bezug auf die empfangenen Daten synchronisierten Signals gleichen Verzögerung $T_S$, sowie einen Ausgangsmusterstromkreis (13), ferner umfassend einen Synchronisierstromkreis (12, 14 bis 28) mit einem an den Eigang der numerischen Signale angeschlossenen Eingang und einem an den Zeitgebereingang des Musterstromkreises angeschlossenen Ausgang, wobei dieser Stromkreis einen Bezugssignalerzeuger (12, 17) für Signale aufweist, die im gleichen Rythmus auftreten wie die numerischen Informationen und gegeneinander phasenverschoben sind, während der Synchronisierstromkreis (12, 14 bis 28) einen in bezug auf die empfangenen Informationen synchronisierten Signalermittlungsstromkreis (14 bis 16, 19 bis 26) umfasst, dadurch gekennzeichnet, dass der Synchronisierstromkreis (12, 14 bis 28) ferner einen Übertragungsstromkreis (27, 28) für synchronisierte Signale aufweist, der einen mit dem Zeitgebereingang des Ausgangsmusterstromkreises (13) verbundenen Ausgang und einen mit dem Erzeuger (12, 17) verbundenen Eingang besitzt, wobei der Ausgang des Ermittlungsstromkreises (14 bis 16, 19 bis 26) mit einem ersten Steuereingang des Synchron Signalübertragungsstromkreises (27, 28) verbunden ist, der ferner einen zweiten Steuereingang besitzt, welcher ein vom dem Hüllensignal der empfangenen Gruppen herrührendes Steuersignal $H_S$ empfängt, während der Ausgang des Übertragungsstromkreises (27, 28) während der Zeitspanne $T_S$ zwischen dem Ender einer empfangenen Informationsgruppe und dem Ende der Übertragung dieser Gruppe durch die Verzögerungslinie (11) das in bezug auf die empfangenen Daten synchronisierte Signal abgibt, welches am Ende einer empfangenen Informationsgruppe ermittelt ist.

2. Vorrichtung nach Anspruch 1, dadurch gekennzeichnet, dass, wenn die Dauer $T_S$ der Dauer der Gruppen gleich ist, das in bezug auf die empfangenen Daten synchronisierte Signal erst am Ende des Empfangs einer Informationsgruppe verfügbar ist, wobei dieses Signal das während des Austretens der Informationen der genannten Gruppe aus der Verzögerungslinie an den Musterzeitgebereingang übertragene Signal ist.

3. Vorrichtung nach Anspruch 1, dadurch gekennzeichnet, dass, wenn $T_S$ kleiner ist als die Dauer der Gruppen und das in bezug auf die empfangenen Daten synchronisierte Signal vor dem Ende einer empfangenen Gruppe verfügbar ist, der Übertragung dieses ggf. veränderliche, in bezug auf die empfangenen Daten synchronisierte Signal an den Musterzeitgebereingang überträgt, insofern als die empfangenen und von der Verzögerungslinie (11) abgegebenen Informationen zur gleichen Gruppe gehören.

4. Vorrichtung nach einem der Ansprüche 1 bis 3, dadurch gekennzeichnet, dass der Erzeuger (12 und 17) rechteckige Bezugssignale $S_i$, $i = 1$ bis $k$ liefert, deren Rythmus f demjenigen der numerischen Informationen entspricht, dessen jedes jedoch in bezug auf das folgende Signal um $1/(k \cdot f)$ verschoben ist, dass die einen ersten Multiplexer (18) aufweist, der k mit den Ausgängen des Erzeugers (12, 17) verbundene Eingänge, sowie einen Ausgang besitzt, welcher ein von einem Wahleingang gewähltes Bezugssignal abgibt, und dass der Ermittlungsstromkreis (14-16, 19-26) einen einerseits an den Eingang der numerischen Signale und andererseits an den Multiplexer angeschlossenen logischen Vergleichsstromkreis (15, 16 und 20 bis 26), sowie einen mit dem Ausgang des logischen Stromkreises angeschlossenen Zähler (19) aufweist, dessen Zustand das unter den $S_i$-Signalen gewählte Signal angibt, wobei der Ausgang dieses Zählers (19) an den Wahleingang des ersten Multiplexers (18) angeschlossen ist und der Zähler (19) bei jedem Durchgang des numerischen Signals mit einem höheren oder niedrigeren Wert beaufschlagt wird, je nachdem dieser Durchgang in bezug auf den entsprechenden Durchgang des gewählten Bezugssignals verfrüht oder verzögert ist, und dass der Übertragungsstromkreis einen zweiten Multiplexer (28) mit an die Ausgänge des Erzeugers (12, 17) angeschlossenen Signaleingängen, mit einem über ein Speicherregister (27) an den Ausgang des Zählers (19) angeschlossenen Steuereingang, sowie mit einem an den Musterzeitgebereingang angeschlossenen Ausgang umfasst, wobei das Speicherregister einen das Steuersignal $H_S$ empfangenden Steuereingang besitzt.

0 037 299

FIG_1

# 0 037 299

## FIG_2

## FIG_3

## FIG_4

2